Europäisches Patentamt

European Patent Office

Office européen des brevets

(11) Publication number : **0 495 622 A2**

(19)

## EUROPEAN PATENT APPLICATION

(12)

(21) Application number : **92300302.4**

(22) Date of filing : **14.01.92**

(51) Int. Cl.⁵ : **G06F 15/401**, G06F 15/403

(30) Priority : **14.01.91 GB 9100733**

(43) Date of publication of application :
**22.07.92 Bulletin 92/30**

(84) Designated Contracting States :
**DE FR GB**

(71) Applicant : **XEROX CORPORATION**
**Xerox Square**
**Rochester New York 14644 (US)**

(72) Inventor : **Lamming, Michael G.**
**179 Hills Road**
**Cambridge CB2 2RN (GB)**
Inventor : **Newman, William Maxwell**
**Yew Tree Cottage, Farnham**
**Blandford Forum, Dorset (GB)**

(74) Representative : **Goode, Ian Roy et al**
**Rank Xerox Patent Department Albion House,**
**55 New Oxford Street**
**London WC1A 1BS (GB)**

(54) **Indexing of data sets.**

(57) A system is disclosed for facilitating later access to a portion of a datastream for retrieval purposes based upon identifying "episodes" in data from other sources related to a user's activities. The stored data, in raw or "episodic" form, are accessed as desired using parameters based on recollections of the user's or database interrogator's activities at the time of the event which the user or interrogator wishes to access or display. Such other sources may include information about the movements, gatherings, conversations, phone calls, etc. of users in a particular environment fitted with the system.

Fig. 3.

EP 0 495 622 A2

This invention relates to the activity-based indexing of data sets, in order to facilitate the fast retrieval at a later date of data of interest. The invention is based on there being at least one set of data defining activity. The retrieval process involves identifying an index point in a data set. Where there are multiple data sets, having index points in one of them facilitates access to the other set to reach the data in it at the point in time, or period, contemporaneous with the identified index point.

The invention focuses upon improving access to information that humans find particularly difficult to retrieve. It exploits a suggested autobiographical model of human memory which observes that humans seem to organise their memory in episodes. Associated with each episode are the properties: Where? When? With whom? and, In pursuit of what goal? an episode occurred. Humans seem able to recall these key properties of an episode long after the details of the episode itself have been forgotten. The present invention is concerned with building a system that enables retrieval of episodes that would otherwise be difficult or impossible to retrieve, including matters for which records are not normally kept. This system has been called a 'Human memory prosthesis'.

The present invention relies on a variety of apparatuses for monitoring, recording and time-stamping various key aspects of human activity, from which a readable list of episodes, or 'activity diary', can be generated automatically. This diary, which correlates quite closely with human recollections of past episodes, can be used simply to stimulate further recall, or to identify an episode and its time of occurrence, or to show a set of episodes from different sets. The times may be used to locate the corresponding items in any other set of time-stamped data, such as a sequence of video frames or an audio record of a meeting.

In what follows, an 'episode' is defined as - a period of time containing a memorable sequence of events -. By dividing a long series of events into such episodes, sequences are formed that are particularly memorable. Episodes have flags associated with them that characterise them and can be used for retrieval.

One form of such apparatus was disclosed in an article in The Sunday Times, 11 February 1990, entitled "Computers acquire social skills", by Jane Bird. This mentioned the use of identity buttons to enable the computer to know who was where in the building at all times. Associated with the system is a network of microphones and/or video cameras capable of recording conversations. It gave the example of a copier in a room monitored by the computer. Upon the copier's developing a fault, a frustrated would-be user tries to recall what a colleague told him about how to cure the fault. The computer is interrogated to find the last time that the two people concerned were at the copier. Once this particular bit of information had been recovered, it was used to access the time-stamped audio records of what was said in the room containing the copier at that point of time. In this way, the enquirer had the opportunity of hearing again the conversation between him and his colleague. A system of the foregoing type also is described in a copending U.S. Patent Application of the instant inventors, which was filed 7 February 1991 under Serial No. 07/652, 159 on "Indexing of Audio/Visual Data".

The aforementioned system has several practical limitations. These include the need on the part of the user to devote a lot of effort to identifying a particular time and place from the raw identity button data, and the lack of precise episode definition from such data. Also the system captures just the location of users, and not their activity or other significant episodes. These drawbacks would make the system of relatively little practical value.

Another relevant publication in this area of technology is the article entitled "Reflexive CSCW; supporting long-term personal work" by H Thimbleby, S Anderson and I Witten, Interacting with Computers, volume 2, No. 3, December 1990, pages 330-336. The term "CSCW" means - computer-supported coöperative work. The section under the heading "Background ", on pages 331/2 of the article, refers to a method whereby a research worker is able to be given on request a record of workstation activities he was undertaking over a chosenperiod. The article suggests that this approach can generate useful information for retrieval purposes, but offers no practical means of doing so. Like the first mentioned system , it fails to recognise the need for analysis of the raw data to produce user-recognisable episodes.

The present invention is based on devising pattern-matching techniques for constructing recognisable episodes from raw data. In this way it offers the user the means to arrive quickly at a particular point in one dataset, possibly in order to be able to obtain access more efficiently and quickly into at least one other dataset. This speed of access is one of the essential requirements in making the technique of practical value.

The invention also takes into account situations where there may be relatively infrequent change of location by users, i.e. where location data would be of little use in identifying episodes with precision. In these situations, other forms of activity are likely to provide a more effective means of episode identification. The invention therefore presents means of instrumenting these activities and analysing the raw data, thus constructing recognisable episodes from these multiple sources of activity data. The invention also observes that retrieval often involves correlating activities of several different kinds, and therefore provides means for doing so.

The present invention will now be described by way of example with reference to the accompanying drawings, in which:

Fig. 1 is a diagrammatic view of a basic data-retrieval system of the present invention, in which the raw activity-based data are broken down into episodes which may be selectively fed to various output devices;

Fig. 2 is a view of a more-complex system than Fig. 1, using two or more of the basic systems of Fig 1 feeding into a compound episode recogniser so as to be able to establish relationships between different forms of input data;

Fig. 3 is a diagrammatic view of one system of the present invention using "active badges" to feed movement information into the system;

Fig. 4 is a diagrammatic view of a sub-system for using badge episode data produced by the system of Fig. 3, to identify when two or more people form a gathering, and for forming a travelogue of the movements of people carrying badges between different zones in the environment being monitored;

Fig. 5 shows in (a) a diary of individual events in the life of one person, and in (b) these events simplified by amalgamating short periods alone into attendance at a gathering;

Fig. 6 is a diagrammatic view of part of a system of the present invention in which the activity being monitored is the presence of various documents on the user's workspace, with at least descriptors of those documents being stored to complement the other data assisting in later retrieval;

Figs. 7(a) to (c) are partial displays of a typical output of the Fig. 6 system;

Fig. 8 is a diagrammatic view of a sub-system based on that system shown in Fig. 6, to break down the presence of documents on the workspace, and the timing of the appearance on, and disappearance from, the workspace, to produce document-movement episodes;

Fig. 9 is a diagrammatic view of a sub-system of the present invention in which the sounds received and emitted by a person wearing a microphone are subjected to a filtering action to determine when the person carrying the microphone is talking, from when he is not. By the use of a compound episode recogniser as shown in Fig. 2, conversations between two or more people can be recognised as such and can be used to form episodes for retrieval purposes;

Figs. 10(a) and (b) are views of typical outputs from the Fig. 9 system, showing how conversations are distinguished from concurrent talk;

Fig. 11 is a diagrammatic view of a sub-system rather similar to that of Fig. 8, in which the input is of telephone calls made or received by an individual in the environment being monitored. By means of signals derived from incoming calls, or from utterances of the person being monitored, such phone calls can be formed into episodes, with any resultant diary including the names of the people with whom the person conversed over the telephone, irrespective of whether or not that person identified himself by name, or was identified by name by the person being monitored; and

Fig. 12 is a diagrammatic view of a sub-system in which the activity being monitored is that of the use of the electronic workstation of the person being monitored.

In the drawings, many parts are specifically labelled as well as being given reference numbers. When components or units are common to two or more of the Figures, they retain their original references.

The data-retrieval system of this invention is intended to operate on activity-based data from a choice of sources.

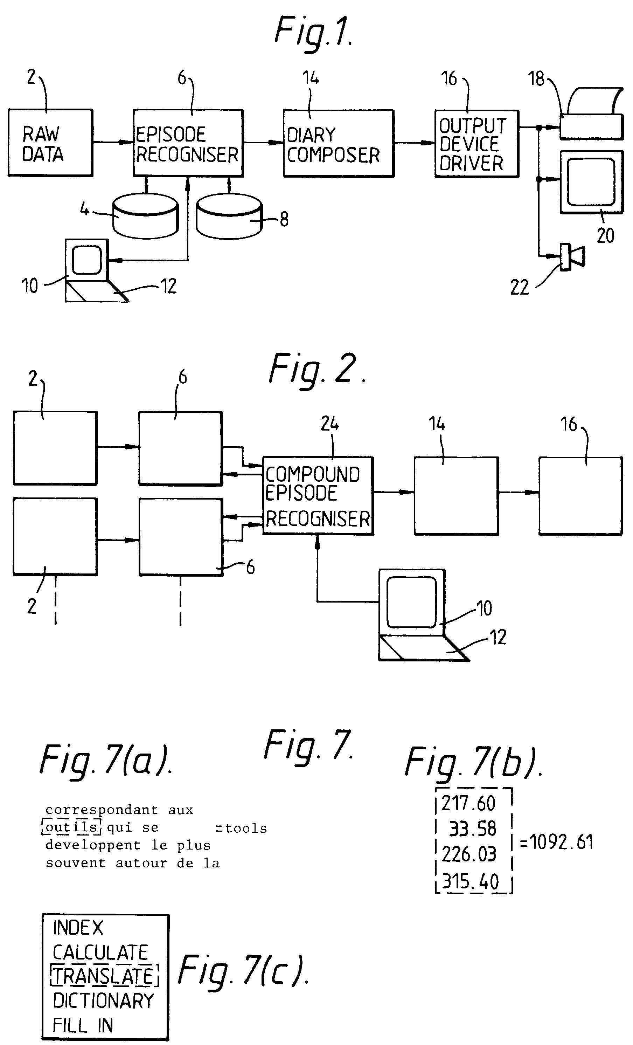

As shown in Fig. 1, the data may be fed directly to a memory 4, prior to processing by the episode recogniser 6, or the recogniser might operate on raw data and store the processed data in a memory 8. Because the information to be retrieved is not known at the time of data capture, it is necessary to be able to specify the appropriate characteristics of the data to be retrieved by means of a query station 10, having a keyboard 12 which the user can use to alter the parameters of the recogniser 6 so that the raw data are processed into episodes having predetermined characteristics.

The output of the recogniser 6 is fed into a diary composer 14 that is adapted to process the episode data fed to it and produce output data in the form of diary information which is fed to a driver 16. Although the driver is shown as operating a printer 18, a visual display unit 20 and a loudspeaker or other audio device 22, only one or none of these devices may be used in any specific embodiment, but there should always be at least one output device able to present the data or information to the user, and to enable him to identify a portion of the data which he associates with a particular episode he is trying to recall, so that the time-stamp of that episode then can be used to access video or audio recordings of the environment in which he was interested at the time of the episode in question.

Although no specific time-keeping device is shown in the Fig. 1 embodiment, it is to be understood that all forms of apparatus according to this invention have to be able to operate on only time-stamped data. As most microprocessors which form components of the system of the present invention have built-in time clocks, whereby the microprocessor output is time-stamped, even if the user is not always able to see the time-stamp on first viewing, but perhaps only on demand, the drawings have omitted the clock input.

That apparatus shown in Fig. 2 uses two different sources 2 of raw of input data with two appropriately configured episode recognisers 6. Each episode recogniser feeds its output to a compound episode recogniser 24, of which the episode-recognition parameters are set by a query device 10, with the queries being passed as necessary upstream to each episode recogniser 6 feeding its output to the compound recogniser 24. This involvement of the individual recognisers with the compound recogniser is necessary in order to enable the latter to sort data into compound episodes involving data of two different types combined in a way specified by the query station 10. In a manner similar to the sub-system shown in Figure 1, the compound recogniser 24 feeds its output to diary composer 14 and an output device driver 16 connected to selected output devices (not shown).

As will be appreciated, the diary composer 3 is application-dependent, whereas the episode recogniser 2 is data-dependent. The compound recogniser accepts both simple queries, as in the Fig. 1 system, as well as compound queries specifying relationships between episodes from different sources.

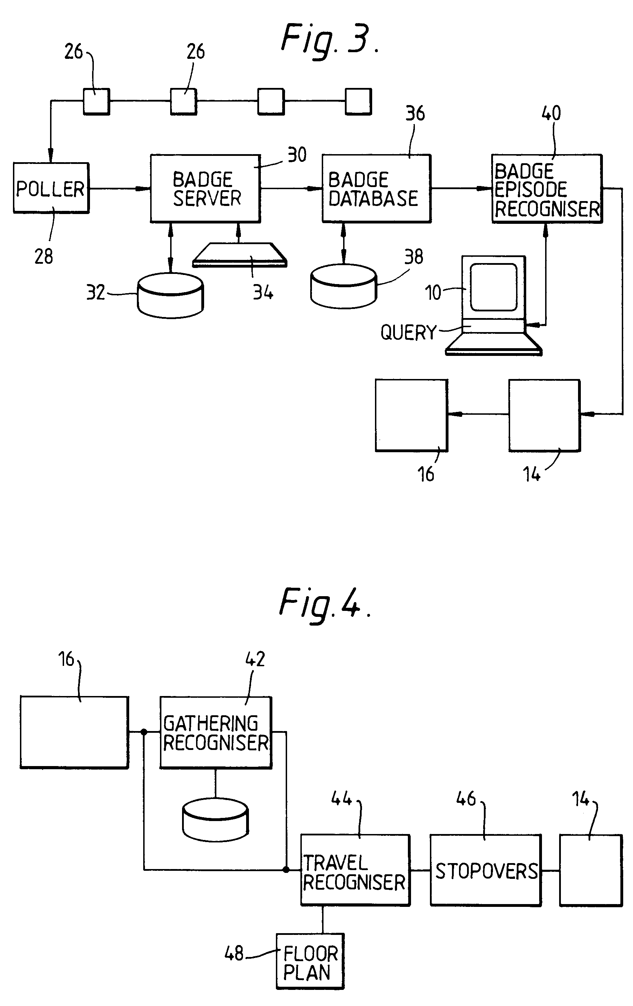

The system shown in Fig. 3 is based on the use of encoded identifiers, each intended to be carried by people working in the environment being monitored. One particularly-convenient form of identifier is the "active badge" offered by Olivetti . This identifier takes the form of miniaturised circuitry in a housing able to be pinned or clipped to the clothing of the person to whom the identifier is issued. The circuitry is designed to emit pulse width modulated infra-red coded signals for a tenth of a second every 12 to 15 seconds. The signals, by their nature, have a range of about six metres, and will not travel through walls, which makes them very useful for keeping track of people moving between rooms in a normal working environment. In each of the rooms or corridors of interest (which would normally exclude toilets, lifts and like utility spaces) would be positioned one or more sensors responsive to the infra-red output signals. The sensors would be connected to a master station processor, which would have the task of polling the sensors for identification 'sightings'; processing the data (which would include decoding the signals to determine which person was within range of a specific sensor at the time of polling), and presenting the processed data in a visual format.

The badge system shown in Fig. 3 uses a network of sensors 26 of which there is at least one in each zone of the building or other environment being monitored. In large rooms, the effective range of the badges might necessitate there being several sensors uniformly distributed over the room, as by being mounted from the ceiling, to ensure that each occupant who is carrying a badge is in range of at least one sensor, so that the room has no 'blind spots'. The sensors 26 are connected to a polling device 28 which sends pulses to the sensors at chosen intervals, and receives from the sensors encoded signals indicating the badges within range of each sensor at the time of polling. The poller 28 supplies this badge information to a badge server 30 having its own data memory 32. The badge server 30 supplies its signals to a badge database 36, having a data memory 38, so that the badge signals are decoded and the identity of the person allocated a badge becomes part of the badge signal. The badge server 30 accepts the poller data and maps sensor signals into people and locations using its own database 32, and maps the detection of a particular person in a particular location at a specific time into arrival and departure events. The database 36 stores badge event data if appropriate. A badge episode recogniser 40 operates on the output from the database 36 to characterise the badge signals into three types of episodes: gatherings; periods alone, and travel between or away from monitored locations. Similarly to what has been already described, the recogniser 40 has its output signals treated by diary composer 14 and driver 16.

The sub-system of Fig. 4 details the way in which the badge event signals may be processed. The first stage of the badge episode recogniser 40 of Fig. 3 is a gathering recogniser 42, which receives badge event signals, and uses an event to keep a record of who is at each location, and notes the formation and dispersion of "gatherings". This term is a convenient one to use, as signifying an episode worthy of being recorded. A working definition of a "gathering" is that it is regarded as an - occasion which has started when two or more people are present concurrently at a specified location, for more than a specified minimum period, and at least one of the participants is not resident at that location -. This implies that the location database forming part of the environment identifies which is the office of each badge holder, so that his presence in his office is recognisably different from the presence of someone else in his office. The gatherings data are stored for use by a travel organiser 44, which receives badge events and supplies signals to a stopover list 46; the stopovers including locations where more than a minimum period was spent, locations at the terminus of a round trip of more than a minimum distance, and the locations of gatherings.

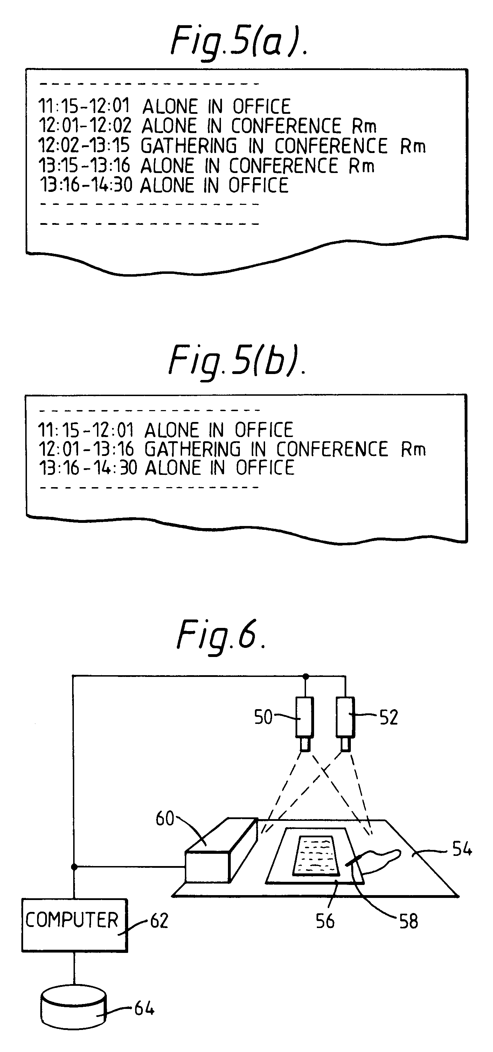

Data from a floor-plan store 48 are used to recognise "round trips", by which term is meant - when a person being monitored leaves his office and moves around the environment before returning to it -. The stopover list 46 incorporates details of gatherings that are fed to the diary composer 14. The diary composer 14 operates as illustrated in Fig- 5. The raw data showing a small part of the movements of one individual shown in Fig. 5 (a). This relatively-raw data would lead to an unnecessarily-long diary or event log. Thus the diary composer 14 operates on this information to combine sequences of consecutive episodes that match specific patterns. Thus, for the activities of the person shown in Fig. 5 (a), the periods when he is alone in the conference room are treated as being part of the general gathering in that room, thus leading to the simplification shown in Fig. 5 (b).

Fig. 6 shows the system which exploits scanning and image-processing technology to read the contents of documents on the desk surface: the user is then able to interact with these contents using a pointer such as a tablet and stylus. A wide range of interaction techniques may be used, including menu selection and dialogue boxes, graphical selection and hand printed character recognition. Moreover, the user is also free simply to write ondocuments with a pen or with an ink pen in the stylus. Particular tasks for which the system could be effective include: selecting key words for document filing; performing calculations on numeric data; translating foreign words, looking up technical terms in dictionaries, checking and filling in forms, retrieving other documents or information that cannot be printed, e.g. audio or video. The invention could therefore give desk workers and people attending meetings access to functions that are currently available only *via* work stations. The apparatus shown in Fig. 6 includes a video camera 50 and a video projector 52 mounted above a desk 54 at which the user sits, a data tablet 56 with a stylus 58, a high-resolution scanner 60, and a control computer 62 with its data store or memory 64 for images.

The camera 50 is mounted so that it field of view includes the document on the desk 54 in front of the user. The video signal is digitised using a frame store, creating a bit map image of the document. Digital filtering techniques are applied to the image, first to determine size and rotation, and then to classify the document according to properties such as line spacing, line-length distribution, etc. Application of these techniques provides (a) a compact resolution-independent encoding of the images properties for use as a descriptor, and (b) orientation and position information. The data tablet 56 and stylus 58 permit the user to select items such as words or columns of numbers. When the user makes a selection as by pressing down on the tablet surface, the coordinates of the stylus 58 are transformed, using the inverse of the rotation and position information, to determine the selection in the coordinates of the page.

If the image scanned in from the camera 50 is of insufficient resolution to support interaction, the document can be scanned in at high resolution. This operation is done *via* the sanner 60, and it could be performed on the entire contents of the user's in-tray before a work session, or on an entire set of meeting papers before a meeting starts. The some digital filtering techniques as before are applied to the high-resolution page image to construct a descriptor and to correct for rotation. Optical character recognition (OCR) is applied to extract the text of the document. This text is stored for later use, indexed by the document descriptor. The page coordinates of each text item are included with the stored text.

The memory 64 contains layout information for each document page entered into the system, indexed by descriptor. The user need not apply high-resolution scanning or OCR to a document page that is already stored. As soon as the descriptor has been generated from the video scanned data, the existence of a stored version can be determined. Layout information describing computer-generated documents can be written directly to the memory 64, and descriptors generated, without recourse to scanning or OCR.

The descriptor of each page of a multi-page document, or of each single document, is non-unique, but is designed to ensure that descriptors are rarely duplicated. Descriptors for pairs of document images may be compared using a correlator to determine if the two images are of the same document. When the user selects an item with the stylus, the corrected coordinates are used to identify the text item in the stored version. The appropriate function (translation, indexing, etc.) can then be applied to the item. The system can also supply hand-printing recognition to the stylus input, or record changes to the scanned image resulting from conventional handwriting.

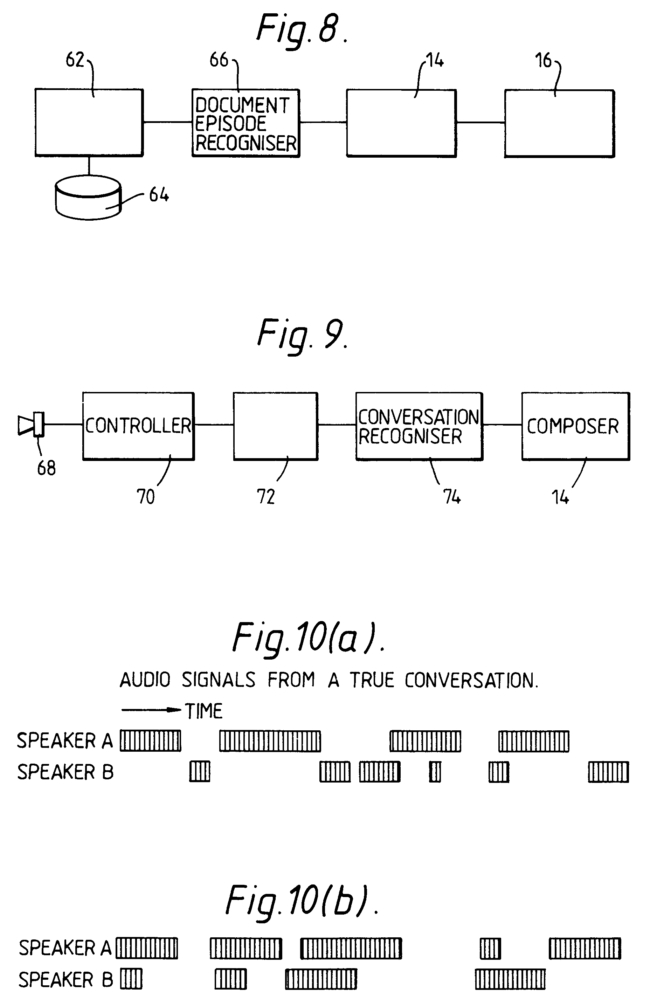

Feedback to the user is provided *via* the video projector 52. Examples of such feedback are shown in Fig. 7. Results of translations (Fig. 7a) or calculations (Fig. 7b) would normally be shown alongside the text. If space permits (and the system can determine this) the results could be displayed directly above the selected item. The video projector 52 also displays menus and dialogue boxes (see Fig. 7c) for interactive control.

Each time the user places a new document on the tablet, or turns the pages of a multi-page document, the system can detect the change in the video-scanned image and then recompute the image's descriptor. It searches for a matching descriptor in its file of documents. Thus if it finds a match, it retrieves the document. If, on the other hand, no match is found, it signals to the user to feed the document into the scanner 60.

This embodiment of the invention can be compared either with workstation-based interaction or with traditional paper-based work practice. As an alternative to workstation-based interaction, it has the advantage that it can deal with any incoming paper document, or print-out of an electronic document. Compared with paper-based methods, it has the advantage of providing access to a number of computer-based functions and services. It has particular advantages in meeting rooms, where use of paper documents is a firmly-trenched practice.

The "audit trail" left by the system provides a source of data about the user's interaction with paper documents. These data can be used to construt episodes in which paper documents are identified either by selected key words or by optically-read contents. The subsystem shown in Fig. 8 uses the data from the computer 62 and armory 64 of the Fig. 6 embodiment. The computer feeds raw document events to a document episode recogniser 66, the events including descriptors, commands and selected data. The recogniser builds episodes from consecutive events applied to the same document; episode descriptions include time-stamp, descriptor and type of episode (including reading, editing, filing, calculating). The diary composer 14 takes episodes describing individual document pages and builds episodes describing activity on multi-page documents and on folders of documents.

While badges and other location sensors are able to detect that people are in the same room, they cannot tell whether these people form a group. Fig 9 showns a sub-system having the ability to detect conversations between people, without necessarily recording their voices, so as to provide a much more accurate indicator of group activity. Users typically remember conversations better than they remember other participants presence so the ability to detect that the conversation took place is likely to be useful for retrieval. In the Fig. 9 system, a microphone 68 is carried by a user, and the level of the audio signal produced by the microphone is monitored by means of a circuit of the type used in cassette recorders. The circuit controller 70 transmits a signal whenever the energy level of the audio signal exceeds a threshold representing the wearer's minimum voice level. These signals, and their time of receipt, are collected by the receiver 72 and passed to a conversation recogniser 74.

All of the energy data sets from a particular location are analysed together. The analysis seeks to identify periods of high energy as utterances, and to fit together utterances of two or more users so as to form continuous conversations. The methods draws on social science research results showing that conversation involves relatively-little overlap and relatively-short pauses between turns. Thus the composite audio stream is more or less continuous, with mostly only one speaker active. Fig. 10 (a) shows the audiostreams generated by participants in a typical conversation, while Fig. 10 (b) shows, in contrast, the audiostreams of two people engaged in conversations with others or in dictating, etc.. Each composite signal can be divided into periods of silence, non-overlapping speech, and overlapping speech. In true conversation between two people, overlap would tend to represent less than 10 percent of all non-silence, while in random collections of speakers, the proportion will be considerably higher, at least 25 percent.

Although this has not been shown in the drawings, an alternative method of capturing the conversation data is by radio telephony. Audio signals from users' microphones are collected at the central location, their energy levels are measured, and the conversation-detection analysis carried out. This is a more-expensive approach that offers increased bandwidth, but it may encounter channel limitations.

The diary composer 14 reduces the list of episodes by excluding short episodes, and by linking conversations between identical groups.

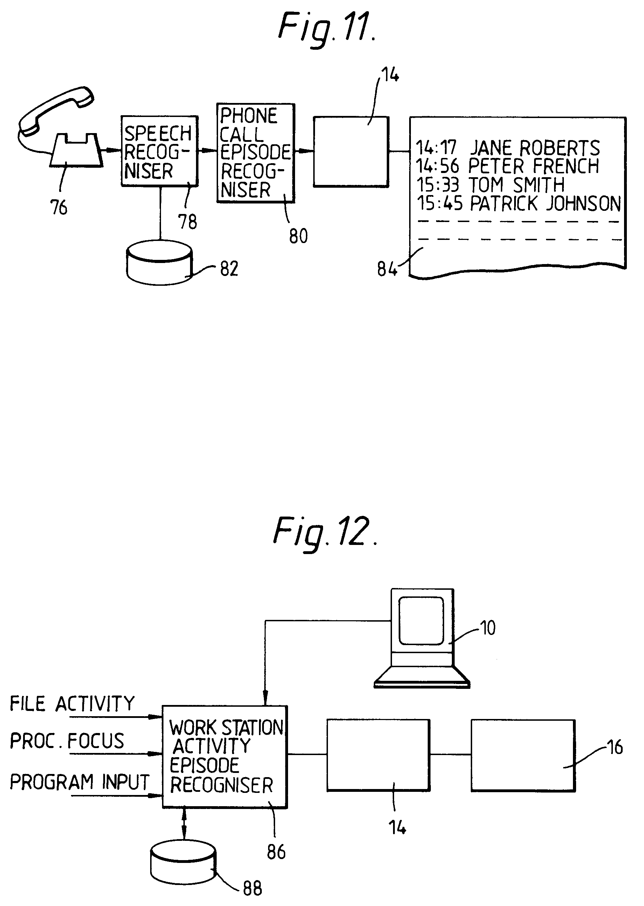

Fig. 11 shows a sub-system that builds a log of incoming and outgoing telephone calls that includes the names of respondents. The proposed device could be attached to a user's telephone and would be capable of building a text database, each record indicating the time and duration of a call, and both the caller's and the recipient's names, with one of the names being generated by a speech-recognition system. The system shown in Fig. 11 uses input from a telephone 76 from which signals are picked off and fed to a speech recogniser 78 that has its output routed to a telephone call episode recogniser 80, with its output, in turn, going to the now-usual composer 14. Output from the composer 14 builds the log, of which a typical set of entries is shown at 84.

This aspect of the invention relies on recognising names spoken by the user in responding to incoming calls and in making outgoing calls.

On making outgoing calls the speech recogniser 78, which is monitoring the audio signal continuously, will recognise an utterance of the form "Patrick Johnson please" or "Could I speak to Patrick", etc. As long as the person being called has corresponding voice identification data entered in a database 82, the utterance by the caller of the spoken name produces the audio signals which are fed to recogniser 80. The recogniser 80 generates the recipient's name as a text string. On receiving incoming calls, the speech recogniser 80 further responds to a recipient's utterance of the form "Hello Patrick" or "Hello Mr Johnson" and generates the caller's name as a text string. This recogniser generated data is stored, so it may be used for subsequent manual confirmation by the user.

The diary composer 14 may combine consecutive calls to the same person, and ignore wrong numbers and interception by switchboards, etc. If the caller is not known to the user, or if the user calls somebody whose data is not in database 82, the system cannot supply the identification data. There is also the possibility that, in the case of an incoming call, the recipient may not respond, such as when speaking to callers who are relatively strange to him, in the way for which the recogniser 80 is programmed. This variation in response, or indeed any utterance in which the confidence of recognition is low, can be used to mark the caller as unknown in the log entry.

The sub-system shown in Fig. 12 uses the activity of a user's workstation to generate episode data. A workstation activity episode recogniser 86 has a data memory 88. The recogniser has various forms of input from a workstation, as shown in the drawing. One input might relate to file activity, another to processor focus, and a third to program input focus. These inputs are from daemons or watchdog processes. These monitor activity such as: the creation, reading, modifying or deleting of files; the name of a program consuming processor resource in a given period, or changes in program input focus (in a window-based user interface). The recogniser 86 translates sequences of activity into user-recognisable episodes. These include: editing a document; reading, answering and filing mail; developing a program; and retrieving information from a database. The recogniser 86 applies pattern-matching to recognise common tasks , i.e. "change input focus to editor $\rightarrow$ change processor focus to editor $\rightarrow$ read file $\rightarrow$ write file $\rightarrow$ write file $\rightarrow$ change input focus", would be recognised as being the steps involved in editing a document. The composer 14 combines similar episodes and removes insignificant episodes.

Users can submit queries to each of the recognisers described above by means of its respective query input 10. A query will specify an episode or episodes of interest, including a pattern of episodes, using key words and descriptions appropriate to the recogniser, for example:

- with KBW in Commons last week;
- document read after reading Mid-year Report;
- talking to KBW and MGL;
- calls to MGL yesterday; and
- reading mail yesterday.

In the case of the compound recogniser 24 (Fig 2) such a query might involve a pattern of the form:

- sending mail to KBW after meeting with MGL.

Although the different embodiments of the invention are implemented in the form of computer code, which is not included in this specification, it is nevertheless believed that the above description and drawings are sufficient to enable a man skilled in the art of designing software systems to put this invention into practice.

## Claims

1. A system for providing for fast random access to a sequence of time-stamped data records of events in a specific environment, comprising:
   means for collecting data in order to construct time-stamped records indicating the locations of persons in the environment;
   means for encoding and storing the records for later selective retrieval and decoding;
   means for specifying a pattern characterising an episode as defined, and for receiving and decoding matching records;
   means for applying rules to the records to arrive at records of episodes matching a specified search pattern, in which each episode record is made up of periods spent alone by the person concerned; in travel within the environment, and in attendance at gatherings, and
   means for requesting transformation into human-readable form of the episode records corresponding to the specified pattern.

2. A system as claimed in claim 1, in which the environment is divided into several zones, and including:
   means for monitoring one or more of the zones to detect the presence within the zone of, and to identify, a person.

3. A system as claimed in claim 1 or 2, in which at least some of the people in the environment carry a personal identifier from which data can be collected by one or more monitors of the environment.

4. A system as claimed in claim 3, in which each identifier is in the form of a transmitter of identification signals to which each monitor is sensitive.

5. A system for providing for fast random access to a sequence of time-stamped data records of events in a specific environment, comprising:
   means for collecting data in order to construct time-stamped records identifying scannable document pages and indicating operations on the pages at locations in the environment;
   means for encoding and storing the records for later selective retrieval and decoding;
   means for enabling identification of the document contents from a record.

6. A system as claimed in claim 5, including means for projecting a display on to the surface of the document or on to a surface bordering the document.

7. A system as claimed in claim 5 or 6, including means for manually selecting from within this document or for displaying a computer function to be applied to the document.

8. A system as claimed in any of claims 5 to 7, including means for manually selecting one or more items on the identified document to be used as input to a computer function to be applied to the document.

9. A system for providing for fast random access to asequence of time-stamped data records of activities in a specific environment , comprising:
   means for collecting data in order to construct time-stamped records of periods of vocal sounds by people in the environment;

means for operating on those records to determine when a conversation is taking place involving one or more of the said people, and for generating time-stamped records of such determinations;

means for encoding and storing the records for later selective retrieval and decoding, and

means for enabling identification of the collected conversation data from a record.

10. A system for providing for fast random access to a sequence of time-stamped data records of activities in a specific environment, comprising:

means for collecting audio signal and other data from a person in the environment placing or receiving a phone call in order to construct time-stamped records of calls;

means for feeding audio signals from these records to a speech recogniser capable of identifying the other participant in the call from the words uttered by the person in the environment, and for adding this identification to the records;

means for encoding and storing the records for later selective retrieval and decoding, and

means for enabling identification of the call data from a record.

11. A system for providing for fast random access to a sequence of time-stamped data records of activities in a specific environment, comprising:

means for collecting data in order to construct time-stamped records of the activity of each workstation associated with each person in the environment, such as the creation, reading, modification or deletion of electronic files;

means for encoding and storing the records for later selective retrieval and decoding;

means for specifying a pattern characterising an episode, and for receiving and decoding matching records, and

means for enabling identification of the collected data from a record.

12. A system as claimed in claims 4 and 9, in which each transmitter has associated with it a microphone for monitoring the level of the audio signals produced by the person carrying the transmitter, the microphone circuit having a filter for rejecting all signals of less than a threshold level, and transmitting data describing periods of vocal sounds greater than the threshold level.

13. A system as claimed in any preceding claim, comprising means for producing at least auditory records of what was said in each of the zones.

14. A system as claimed in any preceding claim, capable of generating episodes of two or more types, including means for arriving at episode records satisfying a specified relationship between episodes of two or more types.

15. A system as claimed in any preceding claim, including:

means for specifying a pattern characterising an episode as defined, and for receiving and decoding matching records;

means for applying rules to the records to arrive at records of episodes matching a specified search pattern, and

means for requesting transformation into human-readable form of the episode records corresponding to the specified pattern.

## Fig.1.

## Fig.2.

## Fig.7.

### Fig.7(a).

correspondant aux
[outils] qui se       =tools
developpent le plus
souvent autour de la

### Fig.7(b).

| 217.60 |
| **33.58** | =1092.61
| 226.03 |
| 315.40 |

### Fig.7(c).

INDEX
CALCULATE
[TRANSLATE]
DICTIONARY
FILL IN

# Fig. 3.

```
┌───┐   ┌───┐   ┌───┐   ┌───┐
│26 │   │26 │   │   │   │   │
└───┘   └───┘   └───┘   └───┘
```

```
┌────────┐     ┌──────────┐     ┌──────────┐     ┌────────────┐
│        │     │  BADGE   │30   │  BADGE   │36   │   BADGE    │40
│ POLLER │────▶│  SERVER  │────▶│ DATABASE │────▶│  EPISODE   │
│        │     │          │     │          │     │ RECOGNISER │
└────────┘     └──────────┘     └──────────┘     └────────────┘
    28
```

QUERY

```
10
```

```
┌────┐     ┌────┐
│ 16 │◀────│ 14 │
└────┘     └────┘
```

32      34      38

# Fig. 4.

```
┌────────┐     ┌────────────┐
│  16    │     │ GATHERING  │42
│        │──●──│ RECOGNISER │
└────────┘     └────────────┘

               ┌────────────┐     ┌───────────┐     ┌────┐
               │  TRAVEL    │44   │ STOPOVERS │46   │ 14 │
            ●──│ RECOGNISER │─────│           │─────│    │
               └────────────┘     └───────────┘     └────┘

        ┌───────┐
     48 │ FLOOR │
        │ PLAN  │
        └───────┘
```

## Fig.5(a).

```
- - - - - - - - - - - - - - - - - - - -
11:15-12:01  ALONE IN OFFICE
12:01-12:02  ALONE IN CONFERENCE Rm
12:02-13:15  GATHERING IN CONFERENCE Rm
13:15-13:16  ALONE IN CONFERENCE Rm
13:16-14:30  ALONE IN OFFICE
- - - - - - - - - - - - - - - - - - - -

- - - - - - - - - - - - - - - - - -
```

## Fig.5(b).

```
- - - - - - - - - - - - - - - - - - -
11:15-12:01  ALONE IN OFFICE
12:01-13:16  GATHERING IN CONFERENCE Rm
13:16-14:30  ALONE IN OFFICE
- - - - - - - - - - - - - - - - - - -
```

## Fig.6.

# Fig.8.

# Fig. 9.

# Fig.10(a).

AUDIO SIGNALS FROM A TRUE CONVERSATION.

⟶ TIME

SPEAKER A

SPEAKER B

# Fig.10(b).

SPEAKER A

SPEAKER B

## Fig.11.

14:17  JANE ROBERTS
14:56  PETER FRENCH
15:33  TOM  SMITH
15:45  PATRICK JOHNSON

## Fig.12.

FILE ACTIVITY

PROC. FOCUS

PROGRAM INPUT

WORK STATION ACTIVITY EPISODE RECOGNISER